# EUROPÄISCHE PATENTSCHRIFT

(11) **EP 0 742 384 B1**
(45) Veröffentlichungstag und Bekanntmachung des Hinweises auf die Patenterteilung: **23.06.1999**
(21) Anmeldenummer: 96105976.3
(22) Anmeldetag: 17.04.1996
(51) Int. Cl.: F16H 61/02

(54) **Verfahren zum Betreiben einer Antriebseinheit und Vorrichtung zur Durchführung des Verfahrens**
Method and apparatus for shifting gears in a vehicle transmission
Dispositif et procédé de changement de vitesses pour la transmission d'un véhicule

(30) Priorität: 11.05.1995 DE 19516948
(43) Veröffentlichungstag der Anmeldung: 13.11.1996
(73) Patentinhaber: Voith Turbo Beteiligungs GmbH, 89522 Heidenheim (DE)
(72) Erfinder: Depping, Herbert, 89537 Giengen (DE); Maier, Wilfried, 89518 Heidenheim (DE); Schempp, Volker, 73235 Weilheim (DE); Häberle, Friedrich, 89518 Heidenheim (DE); Rotter, Erwin, 89564 Nattheim (DE)
(74) Vertreter: Weitzel, Wolfgang, Dr.-Ing. Patentanwalt

(56) Entgegenhaltungen:
- EP-A- 0 352 551
- EP-A- 0 417 275
- DE-A- 3 827 091
- US-A- 5 315 514

## Beschreibung

Die Erfindung betrifft ein Verfahren zum Betreiben einer Antriebseinheit, im einzelnen mit den Merkmalen aus dem Oberbegriff des Anspruchs 1; ferner eine Vorrichtung zur Durchführung des Verfahrens.

Bisher sind in Antriebssträngen, insbesondere in Antriebssträngen mit Automatikgetrieben, welche nach dem Prinzip eines Drehmomentenwandlers mit äußerer Leistungsverzweigung in Kombination mit nachgeschalteten mechanischen Fahrstufen verwendet werden, Schaltprogramme mit festen Umschaltpunkten oder einfache beschleunigungsabhängige Schaltprogramme bekannt. Bei ersteren erfolgt die Vollastumschaltung normalerweise im oberen Drehzahlbereich des Motors n₁ . Die für den Kraftstoff maßgeblichen Hochschaltungen erfolgen somit etwa bei 80 bis 90 % der Motornenndrehzahl. Dadurch wird die größere Motorleistung zur besseren Fahrzeugbeschleunigung ausgenutzt, was in ansteigendem Gelände oder bei großer Personenbesetzung eines Fahrzeuges, insbesondere Busses, erforderlich sein kann. Allerdings ergibt sich dabei auch ein höherer Kraftstoffverbrauch, weil der Motor bei höherer Drehzahl in einem ungünstigeren Kennfeldbereich arbeitet (siehe Motorkennfeld: Verbrauch in Abhängigkeit von der Last und Drehzahl). Bei Bremsbetrieb, d.h. bei eingelegtem Gang und der Gasstellung auf Null hat die Motordrehzahl keinen Einfluß auf den Kraftstoffverbrauch, da die Kraftstofförderung abgestellt ist. Um hier ein Pendeln zwischen den Gängen zu vermeiden, liegen die Rückschaltungen im allgemeinen außer beim Kickdown bei niedrigeren Drehzahlen als die Hochschaltungen. Die Schaltprogramme mit festen Umschaltpunkten sind des weiteren so ausgelegt, daß für Teillast oder ohne Last ebenfalls bestimmte Umschaltpunkte bei kleineren Motordrehzahlen als bei der Vollast vorgegeben werden.

Zusätzlich kann eine sogenannte Übertritt- bzw. Kickdownfunktion vorgesehen werden, welche die Möglichkeit eröffnet, die Gänge bis zur höchst zulässigen Motordrehzahl auszufahren. Derartige Schaltprogramme mit festen Umschaltpunkten arbeiten entweder sehr leistungsorientiert und zeichnen sich deshalb durch einen erhöhten Kraftstoffverbrauch aus oder sehr verbrauchsorientiert. Die Druckschrift EP-A-417 275 offenbart dazu eine Vorrichtung zur Getriebesteuerung, bei welcher das Antriebsmaschinendrehmoment und die Antriebsdrehzahl ermittelt werden. Die Fahrzeugbeschleunigung wird errechnet und daraus die Schaltkennlinien abgeleitet. Die Stellglieder des Getriebes werden dann entsprechend betätigt. Das in dieser Druckschrift beschriebene Verfahren ermöglicht die Auswahl eines gewünschten optimalen Geschwindigkeitsbereiches in Abhängigkeit von der Last und/oder des Schadstoffausstoßes der Verbrennungskraftmaschine.

Der Erfindung liegt deshalb die Aufgabe zugrunde, ein Verfahren zum Betreiben einer Antriebseinheit und eine Vorrichtung zur Durchführung des Verfahrens derart weiterzuentwickeln, daß ein verbessertes Motor-Getriebemanagement mit dem Ziel, ein Mehr an Komfort und ein besseres Beschleunigungs- und Verzögerungsverhalten aus Gründen der Sicherheit bei allen Fahrzuständen sowie eine Verringerung des Kraftstoffverbrauches im Hinblick auf den Umweltschutz erzielt werden kann.

Die erfindungsgemäße Lösung ist durch die kennzeichnenden Merkmale des Verfahrens anspruchs 1 und des Gegenstandsanspruches 9 charakterisiert. Vorteilhafte Ausführungen sind in den Unteransprüchen wiedergegeben.

Zur Erklärung einiger Begriffe:
- Unter "erreichter Drehzahl" wird die im nächsten, d.h. im Zielgang nach der Umschaltung erreichte Antriebs- bzw. Motordrehzahl verstanden.
- "Schaltdrehzahl" ist die vorliegende aktuelle Motordrehzahl in einem Gang, bei welchem die Umschaltung in den nächsthöheren oder nächstniederen Gang erfolgt.
- Als "Grenzdrehzahlen" werden die kleinstmögliche und die größtmögliche Schaltdrehzahl bezeichnet.
- "Schaltdrehzahlbereich" ist der von den Grenzdrehzahlen gebildete Drehzahlbereich eines Ganges von welchem aus die Umschaltung eingeleitet wird.
- Die "Zieldrehzahl" ist die Motor- bzw. Antriebsdrehzahl, welche beim Umschalten bei einer Vielzahl von Schaltdrehzahlen erreicht wird.
- Der "Zieldrehzahlbereich" ist der von den Zieldrehzahlen begrenzte Motor-bzw. Antriebsdrehzahlbereich im Zielgang.
- Mit der Indizierung "konv." werden Schaltverfahren mit festen Umschaltpunkten charakterisiert.

Erfindungsgemäß erfolgt das Umschalten beschleunigungsabhängig. So wird je nach Erfordernis bzw. Fahrwiderstand bei kleineren oder größeren Antriebs- bzw. Motordrehzahlen geschaltet, je nach dem, ob niedriger Kraftstoffverbrauch oder eine ausreichende Beschleunigung zu bevorzugen ist. Für die Schaltung selbst ist die Beschleunigung des Fahrzeuges bzw. dessen Verzögerung maßgebend. Dabei werden immer die zwei folgenden Grenzfahrzustände bzw. Beschleunigungen berücksichtigt:
1. geringe Fahrzeugbelegung in ebenem oder abschüssigem Gelände = hohe Fahrzeugbeschleunigung und
2. hohe Fahrzeugbelegung bei ansteigendem Gelände = geringe Fahrzeugbeschleunigung.

Im erstgenannten Fall ergibt sich eine hohe Fahrzeugbeschleunigung bei niedrigen Antriebsdrehzahlen. Eine Hochschaltung der Gänge kann daher bereits frühzeitig bei relativ niedriger Motordrehzahl erfolgen, was zu einer Senkung des Kraftstoffverbrauchs führt. Aus dem gleichen Grund erfolgt auch die Rückschaltung der Gänge bei kleinerer Verzögerung mit niedriger Motordrehzahl. Im zweiten Fall ist eine größere Motorleistung erforderlich, weshalb die Hochschaltung erst bei einer relativ großen Motordrehzahl erfolgt. In Abhängigkeit von der gemessenen Fahrzeugbeschleunigung bzw. Verzögerung erfolgt die Hoch- oder Rückschaltung der Gänge zwischen diesen beiden Fahrzuständen gleitend, d.h. in einem Schaltdrehzahlbereich. Der Schaltdrehzahlbereich selbst ist außerdem von der Laststufe abhängig; bei größerer Last wird demzufolge auch bei höherer Drehzahl geschaltet.

Erfindungsgemäß werden zwei Grundgedanken verwirklicht:
1) die Vorgabe eines Schaltdrehzahlbereiches derart, daß wenigsten eine Zieldrehzahl im Zielgang erreicht wird;
2) bei Vorgabe wenigstens zweier Zieldrehzahlen - einer unteren und einer oberen Zieldrehzahl - ein abgestufter Kennlininienverlauf im Beschleunigungs/Abtriebsdrehzahldiagramm.

Im ersten Fall ist im Ausgangsgang ein Schaltdrehzahlbereich vorgesehen, in welchem eine Umschaltung in den Zielgang derart erfolgt, daß bei Vorliegen einer Beschleunigungskomponente immer nur eine bestimmte Motor- bzw. Antriebsdrehzahl, die sogenannte Zieldrehzahl erreicht wird. Dies ist jedoch nur für kleine Schaltdrehzahlbereiche möglich. Diese Fallgestaltung ist somit nur eine Untervariante des Falles 2.

Im zweiten Fall werden die beiden Grenzzustände - geringe Fahrzeugbelegung in ebenem oder abschüssigem Gelände und hohe Fahrzeugbelegung bei ansteigendem Gelände berücksichtigt, d.h. hohe Beschleunigung und geringe Beschleunigung.
Bei hoher Beschleunigung wird der Umschaltvorgang bei geringeren Schaltdrehzahlen, d.h. früher eingeleitet als bei einem konventionellen Schaltprogramm mit festen Umschaltpunkten unter der Voraussetzung, daß gleiche Zieldrehzahlen im Zielgang erreicht werden sollen. Ansonsten, d.h. bei Einleitung des Schaltvorganges bei gleicher Schaltdrehzahl findet eine Verschiebung der erreichten Zieldrehzahl zu höheren Antriebs- bzw. Motordrehzahlen hin statt. Bei geringer Beschleunigung und hoher erforderlicher Leistung erfolgt die Umschaltung in den nächst höheren Gang bei höheren Antriebs- bzw. Motordrehzahlen, die jedoch kleiner sind als bei einem konventionellen Schaltverfahren im Hinblick auf die erreichte Zieldrehzahl. Die sich einstellenden Zieldrehzahlen entsprechen dabei vorzugsweise den konventionell erzielten Drehzahlen bei einem konventionellen Umschaltvorgang ohne Berücksichtigung der Beschleunigung.
Die beiden Zieldrehzahlen bestimmen einen sogenannten Zieldrehzahlbereich. Zwischen diesen beiden Zuständen erfolgt der Umschaltvorgang in Abhängigkeit von der Beschleunigung gleitend. Im Beschleunigungs/Abtriebsdrehzahldiagramm ergibt sich eine abgestufte Kennlinie.
Die Zieldrehzahlen und die zugehörigen Schaltdrehzahlen können von vornherein frei unter Berücksichtigung der kritischen Motordrehzahlen im Ziel- und im Ausgangsgang in Abhängigkeit ob die Umschaltung in den nächsthöheren oder nächstniederen Gang erfolgt. Als Zieldrehzahlen können jedoch auch die bei einem konventionellen Schaltvorgang mit festen Umschaltpunkten erzielten festgelegt werden.

Eine abgestufte Kennlinie ist jedoch auch mit nur einer unteren Zieldrehzahl und einer weiteren oberen erreichbaren Drehzahl im Zielgang realisierbar. Die obere erreichbare Drehzahl im Zielgang wird dabei nur bei Umschaltung bei einer Schaltdrehzahl erreicht, während die untere Zieldrehzahl bei Schaltvorgängen, die bei einer Vielzahl von unterschiedlichen Schaltdrehzahlen eingeleitete werden, erreicht wird.

Erfindungsgemäß wird ein Schaltdrehzahlbereich festgelegt. Der gesamte theoretisch zur Verfügung stehende Schaltdrehzahlbereich für Schaltvorgänge in den nächst höheren oder in den nächst niederen Gang ergibt sich immer aus der untersten kritischen Motordrehzahl und der maximalen Motordrehzahl- den sogenannten Grenzdrehzahlen. Bei hoher positiver Beschleunigung erfolgt dabei unter Berücksichtigung der untersten kritischen Motordrehzahl, insbesondere der zu erzielenden Antriebs- bzw. Motordrehzahl im Zielgang beim Hochschalten bzw. bei hoher negativer Beschleunigung unter Berücksichtigung der Antriebs- und Motordrehzahl im Ausgangsgang beim Herunterschalten eine frühere Schaltung. Die Fahreigenschaften können unter Berücksichtigung von Gewicht, Achsübersetzung und Motormoment besser angepaßt werden. Bei niedriger Beschleunigung erfolgt die Umschaltung bei hohen Drehzahlen.

Bei konventionellen Fahrprogrammen mit festen Umschaltpunkten erfolgt das Hoch- oder Herunterschalten zwischen den Gängen bei fest vorgegebenen Schaltdrehzahlen. Im Abtriebsdrehzahl/Antriebsdrehzahl-Diagramm bedeutet dies unterschiedliche Zieldrehzahlen je nach Fahrwiderstand, d.h. je nach Beschleunigung während des Schaltvorganges. Im Extremfall erhält man eine Zieldrehzahl bei gleichbleibender Abtriebsdrehzahl um den Gangsprung dividiert, ansonsten höhere Zieldrehzahlen. Bei dem erfindungsgemäßen beschleunigungsabhängigen Schaltverfahren ist der mögliche Schaltdrehzahlbereich dahingehend vergrößert, daß in Abhängigkeit der Beschleunigung des Fahrzeuges die Umschaltung bei hoher Beschleunigung beim Hochschalten bei einer niedrigeren Schaltdrehzahl gegenüber einem konventionelen Schaltverfahren erfolgen kann, jedoch die eine vorher festgelegte Zieldrehzahl nach dem Umschaltvorgang vorliegt. D.h. mit anderen Worten, die Umschaltung beim Hochschaltvorgang bei hoher Fahrzeugbeschleunigung erfolgt bei niedrigeren Motordrehzahlen als bei einem konventionellen Schaltprogramm mit festen Umschaltpunkten; die Umschaltvorgänge können jedoch hinsichtlich Schaltdrehzahl und Beschleunigung derart ausgelegt und eingeleitet werden, daß bei Umschaltvorgängen mit Motordrehzahlen, welche kleiner sind als die kleinstmögliche bei einer konventionellen Schaltung, immer die gleichen Drehzahlen ohne Beschleunigungseinfluß im Zielgang erreicht werden.

In Abhängigkeit von der Beschleunigung des Fahrzeuges und der Last ist der Schaltbereich derart festgelegt, daß wenigstens eine Zieldrehzahl erreicht wird. Diese kann im Bereich der untersten kritischen Drehzahl im Zielgang liegen, darf diese jedoch nicht unterschreiten. Bei Berücksichtugung beider Grenzzustände ist der Schaltbereich derart festgelegt, daß immer eine Drehzahl zwischen beiden Zieldrehzahlen erreicht wird.

Darüber hinaus besteht die Möglichkeit, das beschleunigungsabhängige Schaltverfahren noch zu variieren durch
a) verbrauchsorientierte
b) leistungsorientierte
beschleunigungsabhängige Schaltverfahren. Bei den normalen beschleunigungsabhängigen Schaltverfahren werden die Hoch- und Rückschaltungen gegenüber den anderen Programmen mit gesamt möglichem Schaltdrehzahlbereich eingeleitet. Bei einer verbrauchsorientierten beschleunigungsabhängigen Schaltversion liegen die Schaltdrehzahlen aus Kraftstoffverbrauchsgründen bezogen auf den gesamten theoretisch möglichen Schaltdrehzahlbereich verhältnismäßig niedrig. Der Schaltdrehzahlbereich wird deshalb relativ klein eingestellt und ist zu geringen Antriebs- bzw. Motordrehzahlen hin verschoben. Im Gegensatz dazu liegen dann die Schaltdrehzahlen beim leistungsorientierten beschleunigungsabhängigen Schaltverfahren bezogen auf den gesamten, theoretisch möglichen Schaltdrehzahlbereich relativ hoch.

Das beschleunigungsabhängige Schalten zwischen den einzelnen Gängen bietet den Vorteil, das Fahrzeug entsprechend den gegebenen Voraussetzungen kraftstofforientiert oder aber, wenn erforderlich, auch leistungsorientiert zu betreiben. Der Kraftstoffverbrauch gegenüber einem konventionellen Schaltprogramm mit festen Umschaltpunkten kann erheblich gesenkt werden.

Durch das Vorgeben wenigstens einer Zieldrehzahl, d.h. die Schaltdrehzahl beim Umschaltvorgang wird so gewählt, daß nach Beendigung des Schaltvorganges, unabhängig von der Fahrzeugbeschleunigung eine vorgegebene Motordrehzahl erreicht wird, kann die Unterschreitung einer kritischen Motordrehzahl vermieden werden, welche aufgrund von Drehmomentenschwingungen des Motors zu einem Fahrzeugruckeln führen kann. Des weiteren besteht bei Einschränkung des Schaltdrehzahlbereiches die Möglichkeit einer schnellen Anpassung auf die Bedürfnisse des Kunden - leistungsorientiertes oder verbrauchsorientiertes Fahren - sowie eine strecken- oder haltestellenabhängige Anpassung während des Betriebes. So ist es beispielsweise nicht erforderlich, daß bei einer ebenen Topographie sehr hohe Schaltdrehzahlen auch bei beladenem Fahrzeug genutzt werden müßten. Bei einer Einschränkung des Schaltdrehzahlbereiches kann bei einer verringerten Beschleunigung bereits eine Umschaltung bei niedrigeren Schaltdrehzahlen gegenüber einem normalen beschleunigungsabhängigen Fahrprogramm erfolgen.

In Analogie dazu erfolgt auch die Rückschaltung verzögerungsabhängig. Dies bietet den Vorteil, daß eine frühe Rückschaltung bei hoher Verzögerung einen kontinuierlichen Geschwindigkeitsverlauf ermöglicht. Zusätzlich ist eine Hoch- und Rückschaltungsbeschränkung vorgesehen. Dies bietet den Vorteil, daß die Hochschaltung nur bei Beschleunigung und eine Rückschaltung nur bei Verzögerung erfolgen können, womit z.B. bei einer Gasrücknahme vor einer Kurve eine ungewollt ausgelöste Hochschaltung vermieden werden kann.

Die vorrichtungsmäßige Umsetzung kann in einer Steuereinrichtung realisiert werden. Diese weist wenigstens ein Steuergerät mit wenigstens drei Eingängen auf, einen ersten Eingang für ein die Beschleunigung des Fahrzeuges beschreibendes Signal; einen zweiten Eingang, welcher mit der Antriebsmaschine gekoppelt ist und der Aufnahme eines die aktuelle Laststufe beschreibenden Signales dient, und einen dritten Eingang, der mit einer Einrichtung zur Ermittlung der aktuellen Motordrehzahl gekoppelt ist. Des weiteren ist wenigstens ein Ausgang vorgesehen, an dem in Abhängigkeit von den Eingangsgrößen ein Stellsignal für den Schaltvorgang ausgegeben wird. Im Steuergerät selbst ist entweder ein Kennfeld oder aber eine Vielzahl von Kennlinien hinterlegt, mittels welcher in Abhängigkeit von den Eingangsgrößen die Stellgröße gebildet wird.

Es besteht die Möglichkeit, jedes Getriebe entsprechend den Einsatzerfordernissen des Kunden mit einer bestimmten Schaltsteuerung bzw. Schalteinrichtung auszurüsten, d.h. entweder der normalen beschleunigungsabhängigen, der verbrauchsorientierten beschleunigungsabhängigen oder der leistungsorientierten beschleunigungsabhängigen Schaltsteuerung bzw. der Schalteinrichtung mit den entsprechenden Voraussetzungen. Im ersten Fall sind die Kennlinien bzw. Kennfelder für einen großen Schaltdrehzahlbereich in den einzelnen Gängen abgelegt. Vorzugsweise wird der gesamte theoretisch mögliche Schaltdrehzhalbereich berücksichtigt, d.h. die unterste kritische Antriebs- bzw. Motordrehzahl und die maximal mögliche Antriebs- bzw. Motordrehzahl eines jeden Ganges. In den beiden anderen Fällen werden Kennfelder und Kennlinien nur für kleinere, gegenüber dem theoretisch möglichen beschränkte Schaltdrehzahlbereiche abrufbar gespeichert. Eine derartige Variante zeichnet sich durch einen relativ geringen steuerungstechnischen Aufwand aus. Im Steuergerät sind dann nur die Kennlinien für die entsprechenden Fahrzustände abzuspeichern.

Des weiteren ist es denkbar, die Schaltdrehzahlbereiche für eine verbrauchsorientierte und leistungsorientiere Fahrweise über einen Faktor aus dem theoretisch gesamt möglichen Schaltdrehzahlbereich bei normalen beschleunigungsabhängigen Schaltprogrammen zu verändern.

Eine andere denkbare Variante besteht darin, das Fahrverhalten aktiv auf die Einsatzerfordernisse abstimmen zu können, in dem beispielsweise dem Fahrer die Möglichkeit gegeben wird, die Schaltsteuerung, d.h. die Einleitung der Umschaltvorgänge entprechend den sich ändernden Randbedingungen (beispielsweise wechselweises Fahren in unebener Topographie und in der Ebene über längere Strecken) zu beeinflussen. Es liegt dann im Ermessensspielraum des Fahrers, über zusätzliche Bedieneinheiten eine Auswahl der geeigneten Schaltsteuerung zu treffen, welche sich auf das Fahrverhalten und den Kraftstoffverbrauch auswirkt. Der steuerungstechnische Aufwand und die Anzahl der verfügbaren Informationen erhöht sich jedoch beträchtlich. Eine Aufwand-Nutzen-Analyse entsprechend den Einsatzerfordernissen scheint daher sinnvoll.

Die erfindugsgemäße Lösung der Aufgabe wird nachfolgend anhand von Figuren erläutert.
- Fig. 1: verdeutlicht schematisch das Grundprinzip des erfindungsgemäßen beschleuigungsabhängigen Schaltverfahrens anhand von Abtriebsdrehzahl/Beschleunigung-Diagrammen;
- Fig. 2: zeigt einen Vergleich bezüglich des zur Verfügung stehenden Schaltdrehzahlbereiches zwischen normal beschleunigungsabhängigen Schaltverfahren und den verbrauchs- oder leistungsorientierten beschleunigungsabhängigen Schaltverfahren;
- Fig. 3: verdeutlicht zur Erklärung ein konventionelles Schaltverfahren;
- Fig. 4: verdeutlicht anhand eines Ausschnittes aus einem Motorkennfeld den Zusammenhang von Kraftstoffverbrauch und Drehmoment mit der Antriebsdrehzahl in einem Gang;
- Fig. 5a und 5b: verdeutlichen die Kennlinien eines normal beschleunigungsabhängigen Schaltprogrammes anhand eines Beispiels;
- Fig. 6a und 6b: zeigen Kennlinien aus dem Abtriebsdrehzahl/Beschleunigungs-Diagramm eines verbrauchsorientierten und eines leistungsorientierten beschleunigungsabhängigen Schaltverfahrens;
- Fig. 7: verdeutlicht die Kennlinie eines verbrauchsoptimierten beschleunigungsabhängigen Schaltverfahrens in einem Abtriebsdrehzahl/Beschleunigungs-Diagramm;
- Fig. 8: zeigt Kennlinien beschleunigungsabhängiger Schaltverfahren unterschiedlichen Laststufen;
- Fig. 9: verdeutlicht anhand einer Kennlinie einen beschleunigungsabhängigen Rückschaltvorgang.

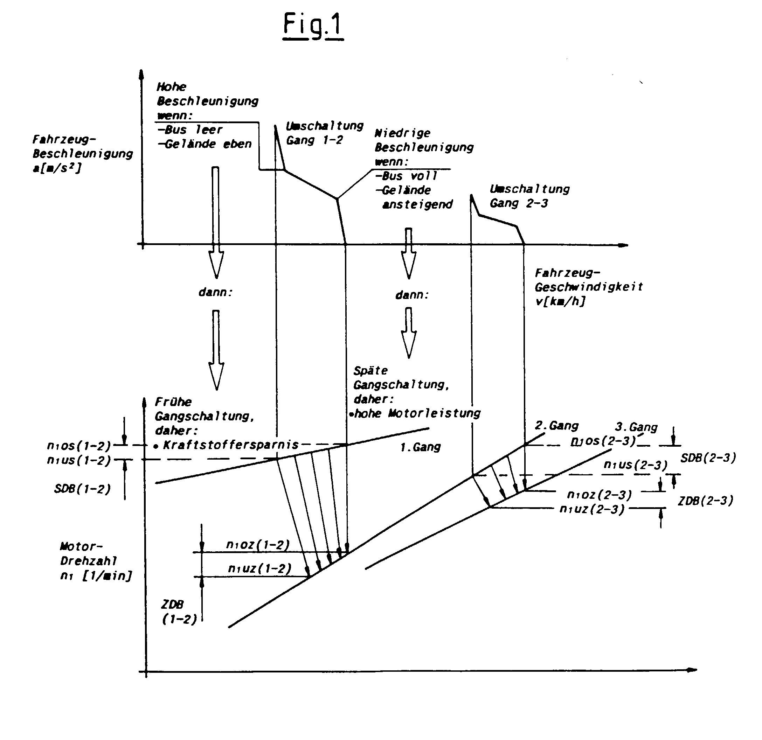

Die Figur 1 verdeutlicht allgemein schematisch das Grundprinzip eines erfindungsgemäßen beschleunigungsabhängigen Schaltprogramms. Zur Verdeutlichung sind dabei in zwei Diagrammen zum einen die Fahrzeugbeschleunigung a über die Fahrzeuggeschwindigkeit v, welche proportional der Abtriebsdrehzahl n₂ ist, und die Motordrehzahl bzw. Antriebsdrehzahl n₁ über die Fahrzeuggeschwindigkeit v für die einzelnen Umschaltvorgänge vom ersten zum zweiten Gang sowie vom zweiten zum dritten Gang aufgetragen. Daraus wird ersichtlich, daß jeweils zwei Grenzfahrzustände bzw. - beschleunigungen berücksichtigt werden:
1. Fahren bei geringer Fahrzeugbelegung in ebenem oder abschüssigem Gelände ergibt eine ausreichende Fahrzeugbeschleunigung bereits bei niedrigen Motordrehzahlen n₁. Die Hochschaltung erfolgt dabei bereits frühzeitig bei relativ niedriger Motordrehzahl n₁, was im allgemeinen zu einer Senkung des Kraftstoffverbrauches führt.
2. Des weiteren ist bei einer hohen Fahrzeugbelegung oder ansteigendem Gelände eine größere Motorleistung erforderlich. Die Hochschaltung erfolgt daher erst bei relativ großer Motordrehzahl.

Abhängig von der gemessenen Busbeschleunigung bzw. Verzögerung erfolgt die Hoch- oder Rückschaltung der Gänge zwischen diesen beiden Fahrzuständen gleitend, d.h. in einem sogenannten Schaltdrehzahlbereich, im Diagramm mit SDB bezeichnet. Dabei entspricht die Bezeichnung SDB₍₁₋₂₎ dem Schaltdrehzahlbereich zur Umschaltung vom ersten in den zweiten Gang und die Bezeichnung SDB₍₂₋₃₎ dem Schaltdrehzahlbereich bezogen auf die Antriebs- bzw. Motordrehzahl bei Umschaltung vom zweiten in den dritten Gang.

Der Schaltdrehzahlbereich SDB ist des weiteren von der entsprechenden Laststufe abhängig; bei größerer Last wird im allgemeinen auch bei höherer Schaltdrehzahl geschaltet, so daß sich auch eine höhere Motor- bzw. Antriebsdrehzahl im nächsten Gang ergibt. Die Schaltdrehzahlbereiche SDB₍₁₋₂₎ und SDB₍₂₋₃₎ werden jeweils von einer unteren Schaltdrehzahl n₁ᵤₛ₍₁₋₂₎ bzw. n₁ᵤₛ₍₂₋₃₎ bei der Umschaltung vom ersten in den zweiten bzw. vom zweiten in den dritten Gang und durch eine obere Schaltdrehzahl n₁ₒₛ₍₁₋₂₎ bzw. n₁ₒₛ₍₂₋₃₎ bei der Umschaltung vom ersten in den zweiten bzw. vom zweiten in den dritten Gang begrenzt. Die unterste Schaltdrehzahl n₁ᵤₛ₍₁₋₂₎ bzw. n₁ᵤₛ₍₂₋₃₎ bestimmt sich dabei aus der untersten kritischen Antriebs- bzw. Motordrehzahl n₁ in dem Zielgang. Dadurch wird vermieden, daß durch Unterschreitung dieser kritischen Motordrehzahl ein Fahrzeugbrummen bzw. -ruckeln durch Drehmomentschwingungen auftritt.

Jedem Schaltdrehzahlbereich SDB₍₁₋₂₎ bzw. SDB₍₂₋₃₎ ist ein Zieldrehzahlbereich ZDB₍₁₋₂₎ bzw. ZDB₍₂₋₃₎ im Zielgang zugeordnet. Die Zieldrehzahlbereiche werden durch die eine kleinste Zieldrehzahl n_{1uz(1-2)} bzw. n_{1uz(2-3)} und eine oberste Zieldrehzahl n_{1oz(1-2)} bzw. n_{1oz(2-3)} begrenzt. Die untersten Zieldrehzahlen in den einzelnen Gängen werden beim Hochschalten durch die unterste kritische Antriebs- bzw. Motordrehzahl begrenzt. Beim Herunterschalten ist die kritische Motordrehzahl Kriterium für die Festlegung der untersten Schaltdrehzahl im Ausgangsgang.

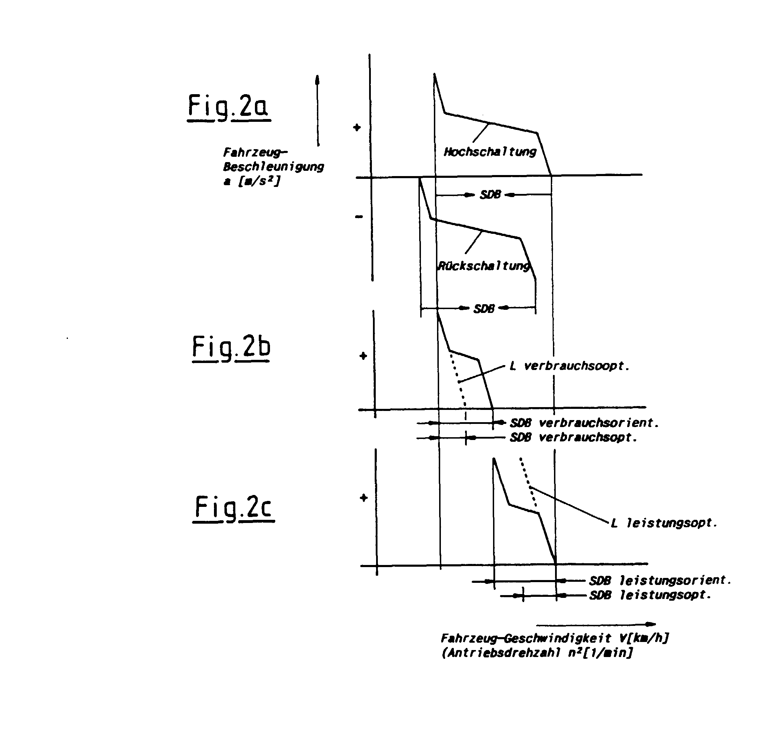

Des weiteren ist es möglich, dieses in der Fig. 1 dargestellte normale beschleunigungsabhängige Schalten noch zu variieren. Dies kann durch
a) verbrauchsorientierte
b) leistungsorientierte
beschleunigungsabhängige Schaltverfahren erfolgen. Diese Möglichkeiten sind in den Figuren 2b und 2c dargestellt.

Die Figur 2a verdeutlicht dabei nochmals zum Vergleich eine Kennlinie für ein normales beschleunigungsabhängiges Schaltverfahren. Die Hoch- und Rückschaltungen erfolgen dabei in einem gesamtmöglichen Schaltdrehzahlbereich SDB. Dieser entspricht entweder dem Schaltdrehzahlbereich SDB₍₁₋₂₎ oder SDB₍₂₋₃₎ in der Figur 1.

Die Figur 2b verdeutlicht gegenüber der Figur 2a ein verbrauchsorientiertes beschleunigungsabhängiges Programm. Die Schaltdrehzahlen liegen hier aus Kraftstoffverbrauchsgründen verhältnismäßig niedrig. Das bedeutet, daß der Schaltdrehzahlbereich SDB gegenüber einem normalen beschleunigungsabhängigen Schaltprogramm, wie in der Figur 2a dargestellt, relativ klein eingestellt wird. Im Extremfall der verbrauchsoptimierten Variante ist dabei die Beschleunigungsfunktion eine relativ steil abfallende Gerade, welche hier in Form einer unterbrochenen Linie L_{verbrauchsopt.} dargestellt ist, mit entsprechend kleinem Schaltdrehzahlbereich SDB_{verbrauchsopt.} und bei verhältnismäßig niedriger Drehzahl.

Im Gegensatz dazu liegen bei einem leistungsorientierten beschleunigungsabhängigen Schaltprogramm, wie in der Figur 2c dargestellt, die Schaltdrehzahlen, bezogen auf ein normal beschleunigungsabhängiges Schaltprogramm, relativ hoch. Bei der leistungsoptimierten Variante ist auch hier die Beschleunigungsfunktion eine Gerade L_{leistungsopt.}, welche im dargestellten Fall als strichpunktierte Linie dargestellt ist. Der Schaltdrehzahlbereich SDB_{leistungsopt.} ist dabei relativ klein und ist zu relativ hohen Drehzahlen hin verschoben.

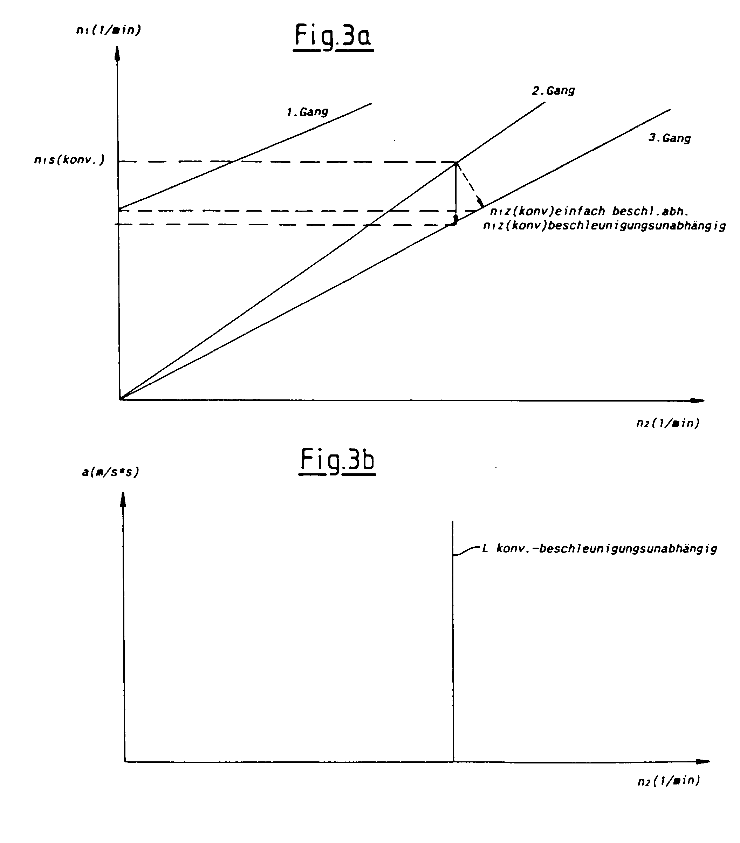

Zum Vergleich verdeutlichen die Figuren 3a und 3b in zwei Diagrammen die Kennlinie für ein konventionelles Schaltverfahren mit festen Umschaltpunkten für einen Umschaltvorgang für den Extremfall ohne Beschleunigungseinfluß. In den Diagrammen ist die Fahrzeugbeschleunigung a über die Fahrzeuggeschwindigkeit v, welche proportional der Abtriebsdrehzahl n₂ ist, und die Motordrehzahl bzw. Antriebsdrehzahl n₁ über die Fahrzeuggeschwindigkeit v für einen Umschaltvorgang aufgetragen. Bei einer konventionellen Umschaltung erfolgt diese bei beispielsweise einer Schaltdrehzahl n₁ₛ₍ₖₒₙᵥ₎. Mit dieser wird Extremfall ohne Beschleunigungseinfluß im dritten Gang eine Antriebs- bzw. Motordrehzahl als Zieldrehzahl n_{1z(konv)-beschl.unabhängig} erreicht. Im Beschleunigungs/Abtriebsdrehzahldiagramm steht für dieses Schaltverfahren die Kennlinie L_{konv.-beschl.unabhängig}.
Da jedoch beispielsweise bei leeren Fahrzeug und Talfahrt beim Schaltvorgang dieses aufgrund der physikalischen Zusammenhänge eine Beschleunigung erfahren kann, wird sich bei eingeleiteten Schaltvorgang bei n₁ₛ₍ₖₒₙᵥ₎ im Zielgang nicht n_{1z(konv)-beschl.unabhängig} einstellen sondern eine höhere Antriebs- und damit auch Abtriebsdrehzahl. In diesem Beispiel n_{1z(konv)-einfach beschleunigungsabhängig}.

In den nachfolgenden Figuren wird das erfindungsgemäße beschleunigungsabhängige Schalten mit den verschiedenen möglichen Variationen anhand eines Beispieles erläutert.

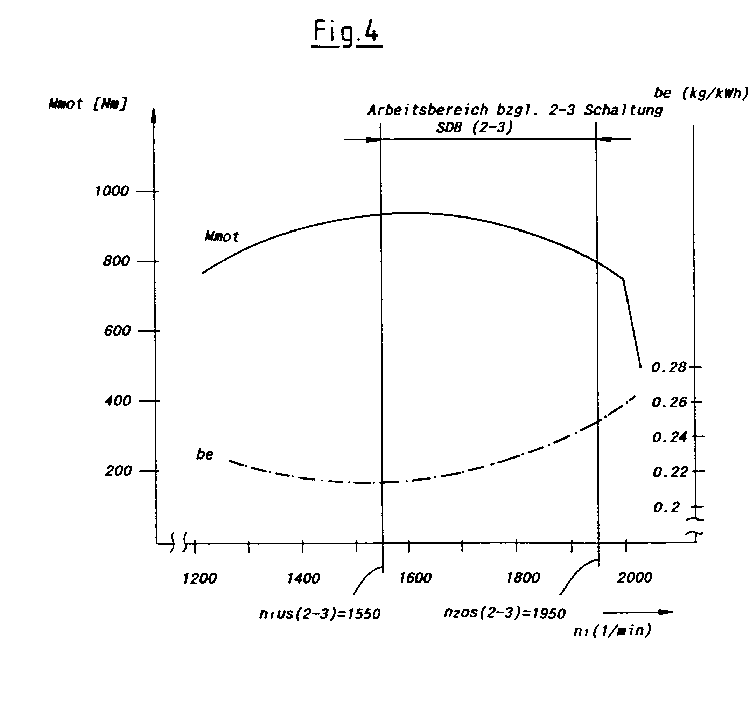

Die Figur 4 verdeutlicht allgemein den Motordrehmomentenverlauf M_{motorisch} über die Antriebsdrehzahl des Motors n₁ und den zugehörigen Kraftstoffverbrauch be für den Arbeits- bzw. Schaltbereich im zweiten Gang bezüglich einer Umschaltung vom zweiten in den dritten Gang. Dieser Arbeits- bzw. Umschaltbereich ist hier als Schaltdrehzahlbereich SDB₍₂₋₃₎ gekennzeichnet. Die kleinste Drehzahl n₁, bei welcher im zweiten Gang eine Umschaltung in den dritten Gang erfolgen kann, ist hier mit n₁ᵤₛ₍₂₋₃₎ bezeichnet. Die größte Drehzahl, bei welcher eine Umschaltung vom zweiten in den dritten Gang erfolgen kann, ist hier mit n₁ₒₛ₍₂₋₃₎ gekennzeichnet. Diese beiden Drehzahlen begrenzen den Schaltdrehzahlbereich SDB₍₂₋₃₎. Aus diesem Diagramm wird ersichtlich, daß im zweiten Gang bei geringer Drehzahl ein geringer Kraftstoffverbrauch sowie ein hohes Motordrehmoment zu verzeichnen ist. Umgekehrt gilt für die größtmögliche Umschaltdrehzahl im zweiten Gang n₁ₒₛ₍₂₋₃₎ der höchste Kraftstoffverbrauch bei geringem Motordrehmoment.

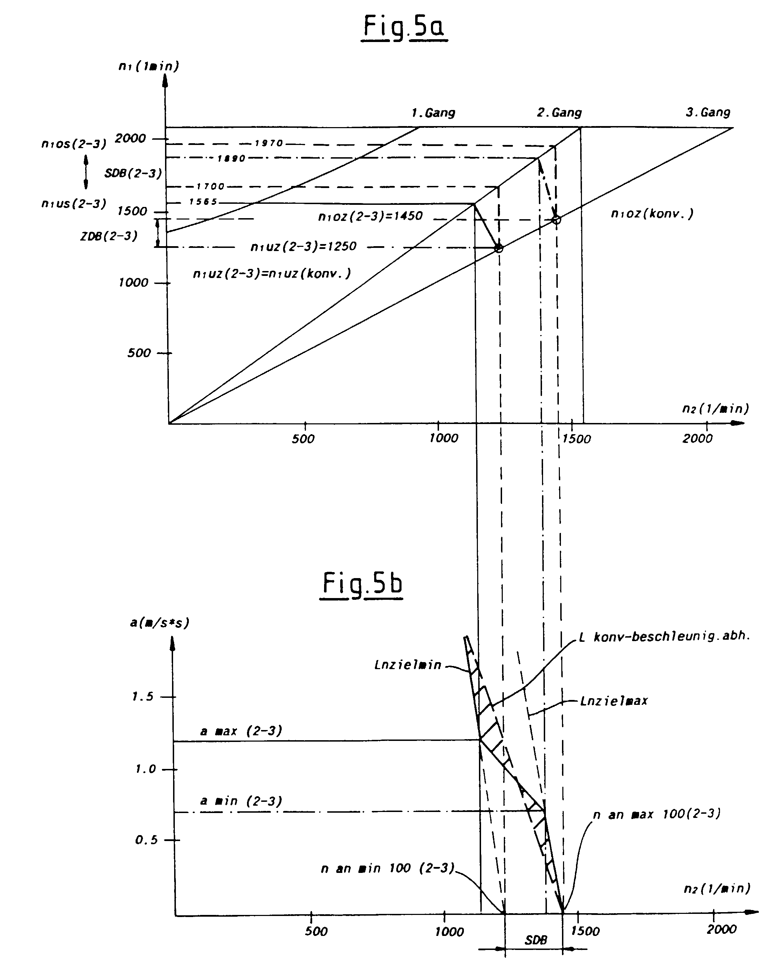

Die Figuren 5a und 5b verdeutlichen anhand zweier Diagramme, in welchen die Antriebsdrehzahl n₁ über der Abtriebsdrehzahl n₂ sowie die Beschleunigung a über der Abtriebsdrehzahl n₂ aufgetragen sind, ein Beispiel für eine normal beschleunigungsabhängige Version eines beschleunigungsabhängigen Schaltverfahrens für eine Umschaltung vom zweiten in den dritten Gang. Die im Diagramm angegebenen Zahlenwerte dienen lediglich zur Erklärung.

Bei einer konventionellen Umschaltung beträgt die kleinst mögliche Schaltdrehzahl n₁ᵤₛ₍ₖₒₙᵥ₎ im zweiten Gang beispielsweise 1700 min⁻¹, mit welcher im dritten Gang eine Antriebs- bzw. Motordrehzahl als Zieldrehzahl n_{1uz(konv)} von 1250 min⁻¹ ohne Beschleunigungseinfluß erreicht wird. Aufgrund der Berücksichtigung einer möglichen Beschleunigungskomponente kann jedoch die Einleitung des Schaltvorganges wesentlich früher erfolgen, d.h. bei niedrigeren Schaltdrehzahlen n₁ₛ₍₂₋₃₎, hier beispielsweise bei der untersten Schaltdrehzahl n₁ᵤₛ₍₂₋₃₎ von 1565 min⁻¹. Trotzdem wird in diesem Beispiel die Antriebs- bzw. Motordrehzahl n_{1uz(2-3)} = n_{1uz(konv)} von 1250 min⁻¹ erreicht. Diese Antriebs- bzw. Motordrehzahl im dritten Gang von 1250 min⁻¹ wird bei Umschaltungen mit Schaltdrehzahlen im Schaltdrehzahlteilbereich von n₁ᵤₛ₍₂₋₃₎ bis n₁ᵤₛ₍ₖₒₙᵥ₎ erzielt. Die Drehzahl n_{1uz(2-3)} wird daher auch als Zieldrehzahl n_{zielmin} bezeichnet. In Analogie können diese Aussagen auch auf die oberste, d.h. größtmögliche Schaltdrehzahl übertragen werden. Die größtmögliche Schaltdrehzahl im zweiten Gang bei einem konventionellen Umschaltvorgang liegt bei n₁ₒₛ₍ₖₒₙᵥ₎=1970 min⁻¹. Nach Beendigung der Umschaltung liegt im dritten Gang die Antriebs- bzw. Motordrehzahl n_{1oz(konv)}=1450 min⁻¹ vor.
Beim erfindungsgemäßen beschleunigungsabhängigen Schalten wird jedoch bei Auftreten einer Beschleunigungskomponente der Umschaltvorgang in Abhängigkeit von der Größe der Beschleunigung früher eingeleitet, beispielsweise bei einer Motordrehzahl n₁ₛ₍₂₋₃₎ = 1890 min⁻¹. Trotzdem werden im dritten Gang wiederum gleiche Antriebs- bzw.
Motordrehzahlen n_{1z}=n_{1oz(konv)}=n_{zielmax}=1450 min⁻¹ erzielt. Bei Beschleunigung a=0 m*s⁻² erfolgt die Umschaltung vom zweiten in den dritten Gang bei n₁ₛ₍₂₋₃₎=n₁ₒₛ₍ₖₒₙᵥ₎ , weshalb diese Umschaltdrehzahl für das beschleunigungsabhängige Umschalten vom zweiten in den dritten Gang mit n₁ₒₛ₍₂₋₃₎ bezeichnet wird.

Der Schaltdrehzahlbereich zur Umschaltung vom zweiten in den dritten Gang SDB₍₂₋₃₎ wird beispielsweise durch die Drehzahlen n₁ᵤₛ₍₂₋₃₎ und n₁ₒₛ₍₂₋₃₎ begrenzt. Erfindungsgemäß erfolgt die Festlegung der Schaltdrehzahlen in diesem Schaltdrehzahlbereich derart, daß nach Beendigung des Schaltvorganges, d.h. im dritten Gang eine Antriebsdrehzahl n_{1z} im Zieldrehzahlbereich ZDB₍₂₋₃₎ von n_{1uz(2-3)} bis n_{1oz(2-3)} erreicht und eine unterste kritische Antriebs- bzw. Motordrehzahl im Zielgang beim Hochschalten nicht unterschritten wird.

Durch das frühzeitige Schalten bei hoher Beschleunigung wird eine niedrigere Motor- bzw. Antriebsdrehzahl erreicht. Entscheidend ist, daß bei jeder Beschleunigung der Schaltvorgang in Abhängigkeit von den beiden berücksichtigten Grenzzuständen bei einer Antriebs-bzw. Motordrehzahl, d.h. Schaltdrehzahl n₁ₛ im Ausgangsgang eingeleitet wird, bei welcher immer eine Drehzahl - die Zieldrehzahl n_{1z} - im Zieldrehzahlbereich im nächstfolgenden Gang erreicht wird. Somit wird bei der Umschaltung vom zweiten in den dritten Gang eine Beschleunigungskomponente ausgenutzt, welche eine gegenüber dem konventionellen Schaltvorgang mit fest vorgegebenen Schaltpunkten eine höhere Motor- bzw. Antriebsdrehzahl im nächsten Gang, hier dem dritten Gang zur Folge hat. Unter Berücksichtigung der Beschleunigungskomponente kann der Schaltdrehzahlbereich SDB₍₂₋₃₎ bei Schaltvorgang vom zweiten in den dritten Gang gegenüber konventionellen Schaltverfahren zu niedrigeren Antriebs- bzw. Motordrehzahlen hin vergrößert werden.

Die Zieldrehzahlen n_{1uz(2-3)} bzw. n_{1oz(2-3)}, welche theoretisch die minimale und die maximale Zieldrehzahl n_{zielmin} und n_{zielmax} sein können, bestimmen den Zieldrehzahlbereich ZDB₍₂₋₃₎. Die minimale und die maximale Zieldrehzahl n_{zielmin} und n_{zielmax} bestimmen den theoretisch möglichen Zieldrehzahlbereich ZDB_{(2-3)theoret.}. Deren Größe wird in der Regel nach die erreichten Zieldrehzahlen im Zielgang bei einem Schaltvorgang ohne Berücksichtigung der Beschleunigung festgelegt. Im dargestellten Fall bedeutet dies, daß bei einer Umschaltung vom zweiten Gang in den dritten Gang bei einer Motor- bzw. Antriebsdrehzahl n₁ᵤₛ₍₂₋₃₎=1565 min⁻¹ und einer darüberliegenden Antriebsdrehzahl von n₁ₛ₍₂₋₃₎ <n₁ₛ₍ₖₒₙᵥ₎- beispielsweise n₁ₛ₍₂₋₃₎=1600 min⁻¹ - im dritten Gang eine Drehzahl von n_{uz(2-3)} = n_{zielmin} erreicht wird.

Die Umschaltung im zweiten Gang erfolgt dabei bei einem leeren Fahrzeug und maximaler Beschleunigung mit der unteren Grenzdrehzahl n₁ᵤₛ₍₂₋₃₎, während bei beispielsweise 100 % Beladung und einer minimalen Beschleunigung die Umschaltung bei sehr hohen Drehzahlen im Schaltdrehzahlbereich SDB₍₂₋₃₎, jedoch bei einer Schaltdrehzahl n₁ₛ₍₂₋₃₎ <n₁ₒₛ₍ₖₒₙᵥ₎=n₁ₒₛ₍₂₋₃₎ eingeleitet wird.

In der Figur 5b sind die sich ergebenden Beschleunigungs/Abtriebsdrehzahlkennlinien für die Zieldrehzahlen der beiden Grenzzustände
1) leeres Fahrzeug und hohe Beschleunigung und
2) Fahrzeug mit beispielsweise 100% Beladung und niedrige Beschleunigung
im Beschleunigungs-/Abtriebsdrehzahl-Diagramm als unterbrochene Linien n_{zielmin} und n_{zielmax} dargestellt.
Die Verbindung zwischen beiden Kennlinien in den Punkten maximaler und minimaler Beschleunigung in der Ebene aₘₐₓ₍₂₋₃₎ und aₘᵢₙ₍₂₋₃₎ spiegelt den Einfluß der Beschleunigung wieder und führt zu einem abgestuften Kennlinienverlauf für die Beschleunigung bei einer Umschaltung vom zweiten in den dritten Gang. Für eine maximale Beschleunigung aₘₐₓ₍₂₋₃₎ bei leerem Fahrzeug wird eine Schaltdrehzahl von n₁ᵤₛ₍₂₋₃₎ festgelegt. Eine minimale Beschleunigung aₘᵢₙ₍₂₋₃₎ bei Beladung, hier beispielsweise 100%, entspricht dabei einer Schaltdrehzahl im Bereich von n₁ₒₛ₍₂₋₃₎.

Die in der Fig. 5b dargestellte Kennlinie gilt nur für einen Lastzustand. Entsprechend der Stellung des Leistungsstellgliedes der Antriebsmaschine, beispielsweise der Drosselklappenstellung, ergeben sich jedoch unterschiedliche Lastzustände, die bei der Umschaltung bzw. der Auslegung des Schaltdrehzahlbereiches ebenfalls berücksichtigt werden müssen.

Es besteht die Möglichkeit, den Zieldrehzahlbereich, d.h. die erreichten Drehzahlen, d.h. die nach dem Umschaltvorgang im nächstfolgenden Gang vorliegenden Antriebs- bzw. Motordrehzahlen n_{1z} im theoretisch möglichen Bereich zwischen n_{1zielmin} und n_{1zielmax} in Abhängigkeit vom Motormoment
1) stufenlos oder
2) laststufenzugeordnet
festlegen zu können. Im zweiten Fall ergeben sich dann in Abhängigkeit von der Anzahl der Laststufen gleichviele vorgebbare Zieldrehzahlbereiche und diesen zugeordnete Schaltdrehzahlbereiche, welche sich hinsichtlich ihrer Größe voneinander unterscheiden können.

Strichpunktiert ist dazu in der Fig. 5b die bekannte Kennlinie L_{konv.-einfach beschleunigungsabhängig} für ein konventionelles einfach beschleunigungsunabhängiges Schalten dargestellt. Bei leerem Fahrzeug und maximaler Beschleunigung erfolgt der Umschaltvorgang im zweiten Gang bei einer Schaltdrehzahl von n₁ᵤₛ₍ₖₒₙᵥ₎, bei minimaler Beschleunigung und bei beispielsweise 100% Beladung trotzdem bei einer Schaltdrehzahl n₁ₒₛ₍ₖₒₙᵥ₎. Die Schraffur verdeutlicht die Abweichungen beider Kennlinien. Daraus wird ersichtlich, daß erfindungsgemäß bei hoher Beschleunigung gegenüber der bekannten konventionellen Kennlinie L_{konv.-einfach beschleunigungsabhängig} der Schaltvorgang mit geringerer Drehzahl stattfindet, während bei minimaler Beschleunigung und hoher Beladung des Fahrzeuges der Schaltvorgang bei höheren Drehzahlen erfolgt.

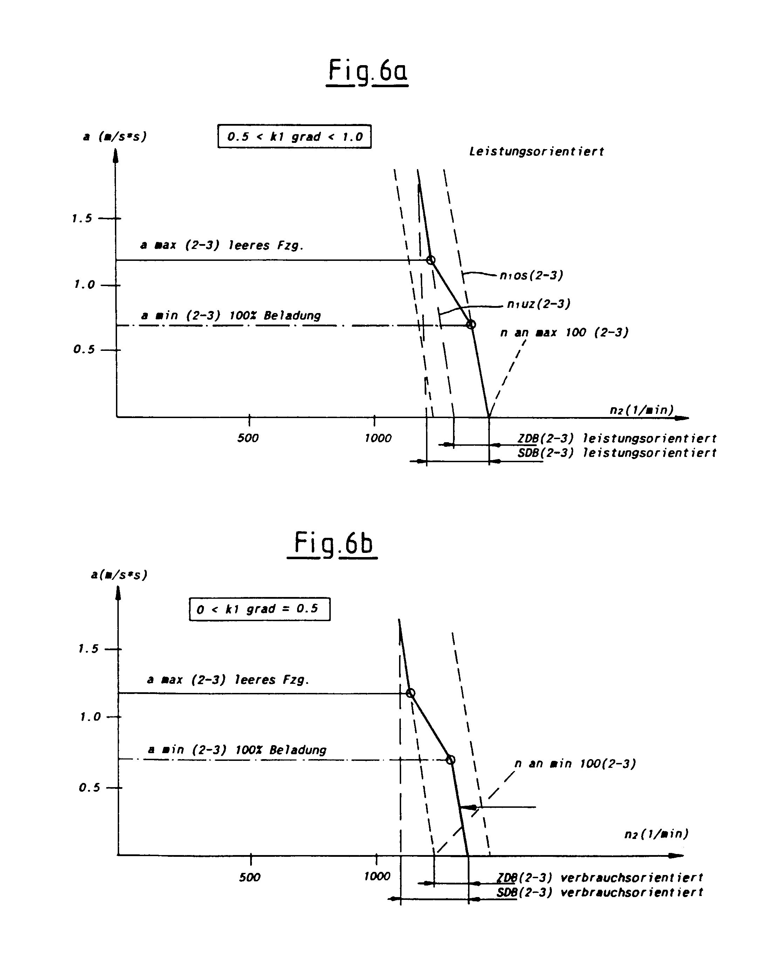

In den Figuren 6a und 6b erfolgt zur Veranschaulichung nochmals eine Gegenüberstellung zwischen einem leistungsorientierten und einem verbrauchsorientierten Schaltverfahren. Zu diesem Zweck sind hier die Abtriebsdrehzahl/Beschleunigungs-Diagramme für die beiden Fälle dargestellt. Der Vergleich erfolgt gegenüber dem normal beschleunigungsabhängigen Schaltverfahren, wie in den Fig. 5a und 5b beschrieben.

Die Figur 6a verdeutlicht dabei die Möglichkeit des leistungsorientierten beschleunigungsabhängigen Schaltverfahrens. Für diesen Fall wird der Schaltdrehzahlbereich zur Umschaltung vom zweiten in den dritten Gang SDB_{(2-3)-leistungsor.} bezüglich der Motordrehzahl bzw. Antriebsdrehzahl n₁ zu höheren Drehzahlen hin verkleinert. Das gleiche gilt in Analogie für den Zieldrehzahlbereich ZDB. Gegenüber dem in der Figur 4 dargestellten normalen beschleunigungsabhängigen Schaltverfahren bedeutet dies eine Verkleinerung des Schaltdrehzahlbereiches in Richtung der oberen Schaltdrehzahl n₁ₒₛ₍₂₋₃₎; die untere Schaltdrehzahl bei einem leistungsorientierten Schalten n_{1us(2-3)-leistungsor.} ist demzufolge wesentlich größer als die untere Schaltdrehzahl n₁ᵤₛ₍₂₋₃₎ beim normalen beschleunigungsabhängigen Schalten. Demzufolge erfolgt die Umschaltung bei hoher Beschleunigung ebenfalls erst bei höheren Motordrehzahlen als beim normalen beschleunigungsabhängigen Verfahren.

Im Diagramm in der Figur 6a sind dazu die Grenzwerte bezüglich der Beschleunigung aₘₐₓ₍₂₋₃₎ bei leerem Fahrzeug und aₘᵢₙ₍₂₋₃₎ bei 100 % Beladung gegenüber den Abtriebsdrehzahlen n₂ bei Umschaltung vom zweiten in den dritten Gang aufgetragen. Dies verdeutlicht gegenüber dem normal beschleunigungsabhängigen Verfahren gemäß Fig. 5b, für welches die Zieldrehzahlkennlinien n_{1uz(2-3)} und n_{1oz(2-3)} der Grenzzustände bei aₘₐₓ₍₂₋₃₎ bei leerem Fahrzeug und aₘᵢₙ₍₂₋₃₎ bei 100 % Beladung mittels unterbrochener Linien dargestellt sind, daß bei einer maximalen Beschleunigung bei leerem Fahrzeug der Schaltvorgang erst bei höheren Antriebsdrehzahlen im zweiten Gang erfolgt.

Die diagrammäßige Darstellung in der Figur 6a verdeutlicht somit, daß gegenüber einer normal beschleunigungsabhängigen Schaltversion, wie sie in den Figuren 5a und 5b dargestellt ist, eine Verkleinerung des Schaltdrehzahlbereiches und eine Verschiebung der Schaltdrehzahlen zu höheren Antriebsdrehzahlen hin erfolgt.

Demgegenüber erfolgt bei einer verbrauchsorientierten Schaltversion entsprechend der Figur 6b die Verkleinerung zugunsten geringerer Antriebsdrehzahlen in bezug auf den Schaltdrehzahlbereich der Figur 5.

Die Bereiche für leistungs- oder verbrauchsorientierte Schaltverfahren können beispielsweise mittels eines Faktors aus dem gesamt theoretisch möglichen Schaltdrehzahlbereich ermittelt werden. Die technische Umsetzung liegt dabei im Ermessen des Fachmannes.

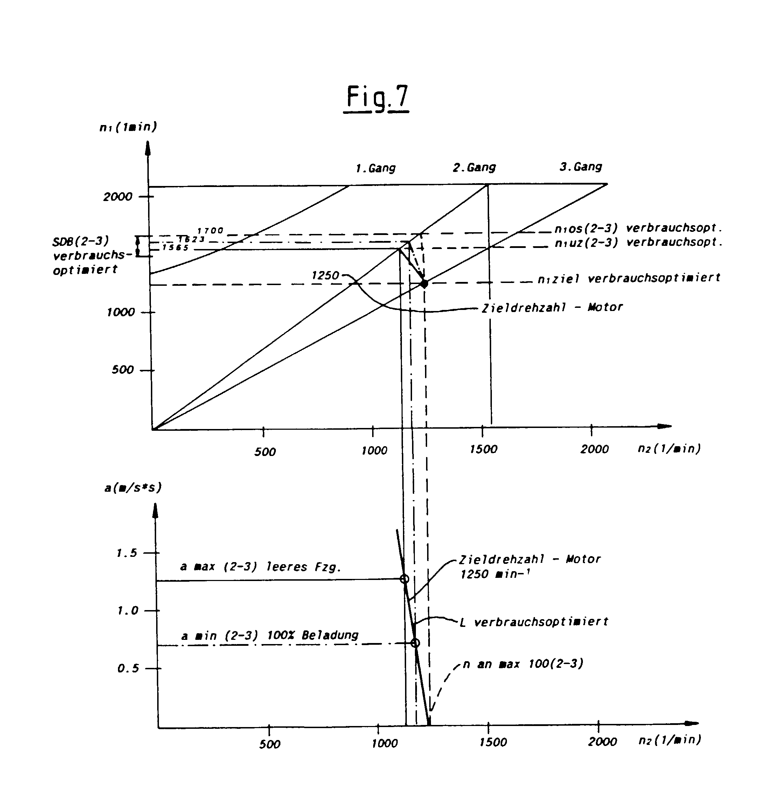

Die Figur 7 verdeutlicht eine Abwandlung der normal beschleunigungsabhängigen verbrauchsorientierten Version entsprechend Fig. 6b für eine Umschaltung vom zweiten in den dritten Gang in eine verbrauchsoptimierte Version. Die Grundvoraussetzungen sind die gleichen, wobei jedoch der Arbeitsbereich SDB_{(2-3)verbrauchsopt.} gegenüber dem der verbrauchsorientierten Version SDB_{verbrauchsor.} noch weiter verkleinert wird. Wesentlich für eine verbrauchsoptimierte Schaltung ist auch die Vorgabe von nur einer einzigen Zieldrehzahl n_{ziel-verbrauchsopt.}.
Die Schalteinleitung im zweiten Gang erfolgt dabei bei sehr hoher Beschleunigung im Bereich der unteren Schaltdrehzahl des Schaltdrehzahlbereiches n_{1us(2-3)-verbrauchsopt.} und bei niedriger Beschleunigung im Bereich des oberen Grenzwertes n_{1os(2-3)-verbrauchsopt.} des Arbeitsbereiches SDB_{(2-3)-verbrauchsopt.}.

In diesem Fall, dem Extremfall der verbrauchsorienterten Version, ist die Beschleunigungsfunktion eine relativ steil abfallende Gerade. Dies bedeutet, daß in einem relativ kleinen Schaltdrehzahlbereich im zweiten Gang die Umschaltung in den dritten Gang erfolgt und dementsprechend dem kleinen Drehzahlbereich im zweiten Gang die Beschleunigungswerte zugeordnet werden, welche eine Einleitung des Schaltvorganges zur Folge haben. Der Umschaltvorgang vom zweiten in den dritten Gang findet dann bezugnehmend auf die Figur 4 bei relativ geringen Verbrauchswerten statt.

In Analogie dazu ist auch der hier im Einzelnen nicht dargestellte Extremfall der leistungsorientierten Umschaltung die leistungsoptimierte Umschaltung möglich.

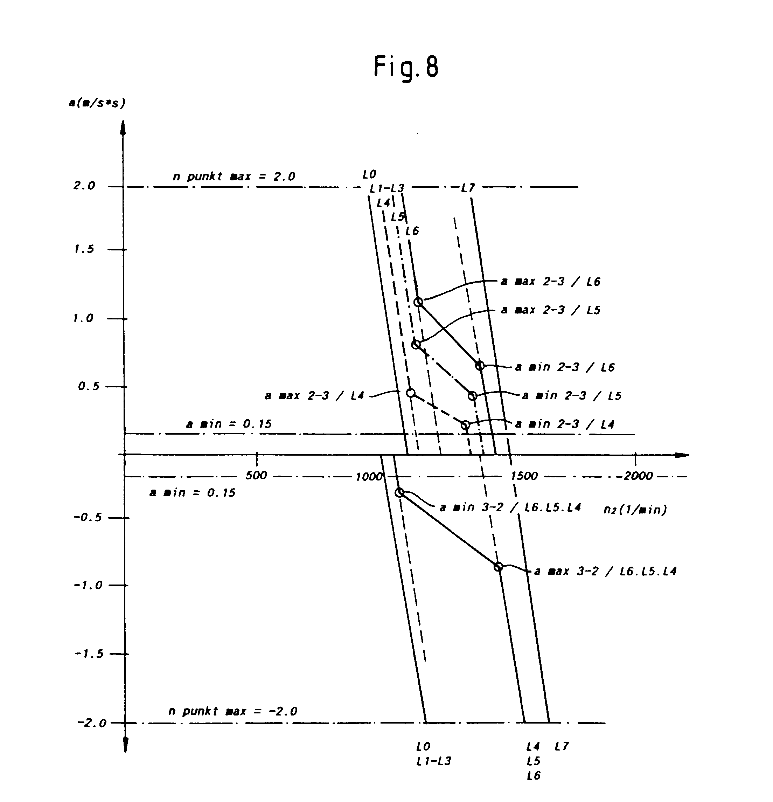

Während bisher nur auf die Kennlinien einzelner Lastzustände eingegangen wurde, verdeutlicht die Figur 8 den gestuften Kennlinienverlauf für ein normal beschleunigungsabhängiges Schaltverfahren für eine Vielzahl von einzelnen Laststufen L0 bis L7. Für diese einzelnen Laststufen ist jeweils ein bestimmter Schaltdrehzahlbereich d.h. Arbeitsbereich im Ausgangsgang festgelegt und ebenso ein Zieldrehzahlbereich im Zielgang. Diese Bereiche verschieben sich mit größer werdender Laststufe zu höheren Motor- bzw. Antriebsdrehzahlen. Analog verschieben sich somit auch die untersten kritischen Schaltdrehzahlen für die einzelnen Laststufen im Zielgang zu höheren Drehzahlwerten hin.
Deutlich wird des weiteren, wie am Beispiel einer Rückschaltung in der Laststufe L6 dargestellt, daß die Rückschaltung verzögerungsabhängig erfolgt.

Die laststufenabhängige Umschaltung ist eine Möglichkeit. Eine andere besteht in der stufenlosen beschleunigungsabhängigen Umschaltung. Im letztgenannten Fall erhöht sich jedoch aufgrund der Vielzahl von zu beachtenden Zieldrehzahlen der steuerungstechnische Aufwand. Im Steuergerät der Steuervorrichtung müßten ganze Kennfelder abgelegt werden, die eine Zuordnung zwischen jedem beliebigen Motorleistungskennwert (Drehmoment und Drehzahl), der aktuellen Beschleunigung und der Schaltdrehzahl ermöglichen.

Im allgemeinen werden diese Schaltsteuerungen bzw. Steuereinrichtungen derart aufgebaut und ausgelegt, daß der Kunde ein Fahrzeug mit einer Schaltsteuerung entsprechend seinen Haupteinsatzgebieten erhält. Die Getriebe und deren Steuerung sind dann derart ausgelegt, daß entweder normal beschleunigungsabhängig, oder beschleunigungsabhängig-leistungsorientiert oder beschleunigungsabhängig-verbrauchsorientiert gefahren werden kann. Eine andere denkbare Variante besteht darin, daß der Fahrer aktiv auf sich ändernde Randbedingungen, beispielsweise hauptsächlicher Betrieb des Fahrzeuges in der Ebene (vorzugsweise verbrauchsorientierte Fahrweise) oder in sehr unebener Topographie (vorzugsweise leistungsorientierte Fahrweise), reagieren kann, d.h. selbst die Möglichkeit besitzt, das erforderliche Schaltverfahren auszuwählen, beispielsweise über eine Betätigungseinrichtung in Form eines Handhebels in der Fahrerkabine. Andere Auswahlmöglichkeiten sind ebenfalls denkbar. Im letztgenannten Fall erhöht sich jedoch der steuerungstechnische Aufwand. Auf die einzelnen Möglichkeiten der vorrichtungsmäßigen Umsetzung der beschleunigungsabhängigen Umschaltsteuerung soll hier im einzelnen nicht eingegeangen werden, da die Möglichkeiten zum Aufbau einer derartigen Einrichtung allgemein bekannt sind.

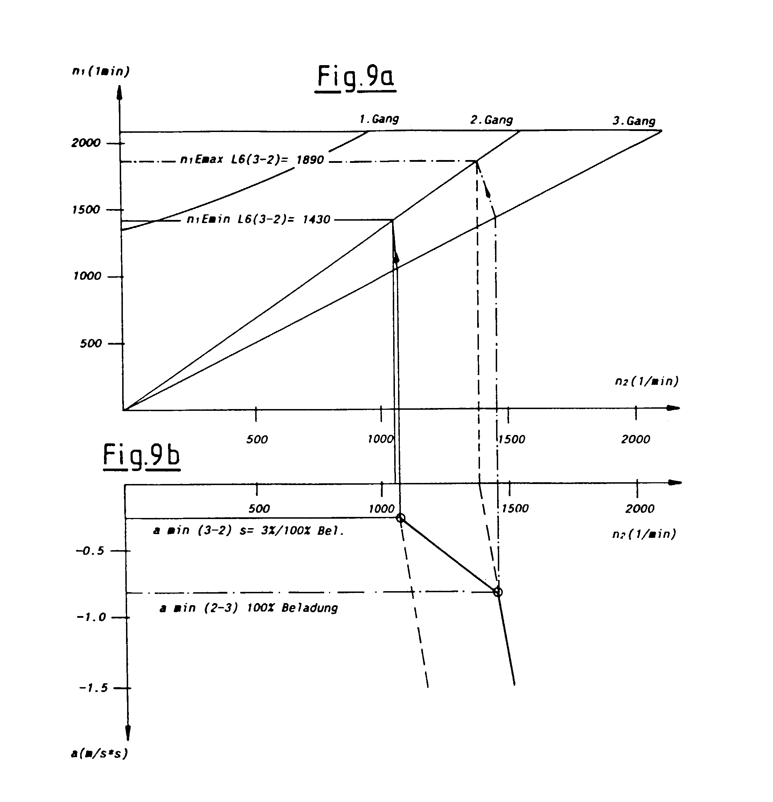

Die Figuren 9a und 9b verdeutlichen die Möglichkeit eines beschleunigungsabhängigen Rückschaltvorganges.

## Patentansprüche

1. Verfahren zum Betreiben einer Antriebseinheit eines Fahrzeuges, umfassend eine Antriebsmaschine und ein Getriebe mit wenigstens zwei Gängen,
1.1 bei welchem folgende Größen ständig ermittelt werden:
- eine die Beschleunigung des Fahrzeuges charakterisierende Größe
- die Leistung der Antriebsmaschine charakterisierende Größen;
1.2 bei welchem für einen Umschaltvorgang im Ausgangsgang ein Schaltdrehzahlbereich und ein Drehzahlbereich, welcher durch ein kleinste und eine größte erreichbare Antriebsdrehzahl im Zielgang begrenzt ist, festlegbar sind;
1.3 bei welchem der Schaltdrehzahlbereich wenigstens durch eine untere Schaltdrehzahl und eine obere Schaltdrehzahl und der Drehzahlbereich durch eine untere Zieldrehzahl sowie eine weitere Drehzahl begrenzt werden;
1.4 bei welchem der Umschaltvorgang in Abhängigkeit von der ermittelten Beschleunigung eingeleitet wird, gekennzeichnet durch die folgenden Merkmale:
1.5 bei welchem die untere Zieldrehzahl bei einem Umschaltvorgang in einem ersten Grenzzustand mit hoher Beschleunigung bei niedrigen Antriebsdrehzahlen oder mit geringer Verzögerung bei niedrigen Antriebsdrehzahlen, bei Einleitung einer Umschaltung bei einer Vielzahl von Schaltdrehzahlen erreicht wird;
1.6 bei welchen der Schaltvorgang zwischen dem ersten Grenzzustand und der größten erreichbaren Antriebsdrehzahl im Zielgang in Abhängigkeit der ermittelten Größen im Schaltdrehzahlbereich im Ausgangsgang eingeleitet wird.

2. Verfahren nach Anspruch 1, gekennzeichnet durch folgende Merkmale:
2.1 bei welchem der Drehzahlbereich als Zieldrehzahlbereich durch eine obere Zieldrehzahl begrenzt wird;
2.2 bei welchem die obere Zieldrehzahl bei einem Umschaltvorgang in einem zweiten Grenzustand mit geringer Beschleunigung bei hohen Antriebsdrehzahlen oder mit großer Verzögerung bei hohen Antriebsdrehzahlen, bei Einleitung einer Umschaltung bei einer Vielzahl von Schaltdrehzahlen erreicht wird;
2.3 bei welchem der Schaltvorgang zwischen den beiden Grenzzuständen in Abhängigkeit der ermittelten Größen im Schaltdrehzahlbereich im Ausgangsgang eingeleitet wird.

3. Verfahren nach einem der Ansprüche 1 oder 2, dadurch gekennzeichnet, daß der Schaltdrehzahlbereich im Ausgangsgang derart festgelegt wird, daß dieser den gesamten theoretisch möglichen Schaltdrehzahlbereich, welcher durch eine unterste kritische Antriebsdrehzahl und eine maximal mögliche Antriebsdrehzahl begrenzt wird, umfaßt.

4. Verfahren nach einem der Ansprüche 1 bis 3, dadurch gekennzeichnet, daß der Schaltdrehzahlbereich in seiner Größe gegenüber dem theoretisch möglichen Schaltdrehzahlbereich verkleinert wird.

5. Verfahren nach einem der Ansprüche 1 bis 4, dadurch gekennzeichnet, daß der Schaltdrehzahlbereich zu niedrigen Antriebsdrehzahlen hin verschoben ist.

6. Verfahren nach einem der Ansprühe 1 bis 4, dadurch gekennzeichnet, daß der Schaltdrehzahlbereich zu höheren Antriebsdrehzahlen hin verschoben ist.

7. Verfahren nach einem der Ansprüche 5 oder 6, dadurch gekennzeichnet, daß der Schaltdrehzahlbereich derart festgelegt wird, daß bei einem Schaltvorgang im gesamten Schaltdrehzahlbereich nur eine einzige Zieldrehzahl im Zielgang erreicht wird.

8. Verfahren nach einem der Ansprüche 4 bis 7, dadurch gekennzeichnet, daß der Schaltdrehzahlbereich über einen Faktor aus dem theoretisch gesamt möglichen Schaltdrehzahlbereich verändert wird.

9. Antriebseinheit zur Durchführung des Verfahrens nach einem der Ansprüche 1 bis 8
9.1 mit einer Antriebsmaschine;
9.2 mit einem Getriebe, wenigstens zwei Gänge umfassend;
9.3 mit einer, dem Getriebe zugeordneten Steuereinrichtung;
gekennzeichnet durch die folgenden Merkmale:
9.4 die Steuereinrichtung weist ein Steuergerät mit wenigstens drei Eingängen und wenigstens einem Ausgang auf;
9.5 der erste Eingang ist mit einer Meßeinrichtung zur Erfassung einer, die Beschleunigung des Fahrzeuges beschreibenden Größe gekoppelt;
9.6 der zweite Eingang ist mit einer Einrichtung zur Erfassung des Momentes der Antreibsmaschine gekoppelt;
9.7 der dritte Eingang ist mit einer Einrichtung zur Erfassung der Drehzahl der Antriebsmaschine gekoppelt;
9.8 der Ausgang ist mit einem Stellglied zur Realisierung des Schaltvorganges im Getriebe gekoppelt;
9.9 im Steuergerät ist wenigstens eine Kennlinie für einen Schaltdrehzahlbereich zur Charakterisierung des Zusammenhanges zwischen aktueller Beschleunigung, Antriebsdrehzahl, Antriebsmoment und einer Schaltdrehzahl abspeicherbar;
9.10 es sind Mittel zur Bildung der Stellgröße aus den Eingangsgrößen vorgesehen.

10. Antriebseinheit nach Anspruch 9, dadurch gekennzeichnet, daß das Mittel eine im Steuergerät programmierte Routine ist.

11. Antriebseinheit nach einem der Ansprüche 9 oder 10, dadurch gekennzeichnet, daß für jede Laststufe eine Kennlinie im Steuergerät abgespeichert ist.

12. Antriebseinheit nach einem der Ansprüche 9 oder 10, dadurch gekennzeichnet, daß ein Kennlinienfeld im Steuergerät abgespeichert ist.

13. Antriebseinheit nach einem der Ansprüche 9 bis 12, dadurch gekennzeichnet, daß im Steuergerät für wenigstens zwei Schaltdrehzahlbereiche Kennlinien oder Kennfelder abgespeichert sind.

14. Antriebseinheit nach Anspruch 13, dadurch gekennzeichnet, daß am Steuergerät ein weitere Eingang vorgesehen ist, welcher mit einer Betätigungseinrichtung zur Auswahl der Schaltdrehzahlbereiche gekoppelt ist.

## Claims

1. Method for operating a driving unit of a motor vehicle comprising a driving motor and a transmission with at least two gears,
1.1 in which the following values are detected continually:
- a value characterising the acceleration of the motor vehicle
- values characterising the output of the driving motor;
1.2 in which for a shifting procedure in first gear a shift speed range and a speed range, which is delimited by a lowest and a highest obtainable driving speed in the target gear, are determinable;
1.3 in which the shift speed range is delimited at least by a lower shift speed and an upper shift speed and the speed range is delimited by a lower target speed and an additional speed;
1.4 in which the shifting procedure is initiated depending on the detected acceleration, characterised by the following features;
1.5 in which the bottom target speed is reached in a shifting procedure in a first limit position with high acceleration at low driving speeds or with slight deceleration at low driving speeds on the initiation of a gear shift at a plurality of shift speeds;
1.6 in which the shifting procedure is initiated between the first limit position and the highest obtainable driving speed in the target gear depending on the detected values in the shift speed range in first gear.

2. Method according to claim 1, characterised by the following features:
2.1 in which the speed range as a target speed range is delimited by an upper target speed;
2.2 in which the upper target speed is reached in a shifting procedure in a second limit position with slight acceleration at high driving speeds or with high deceleration at high driving speeds on the initiation of a gear shift at a plurality of shift speeds;
2.3 in which the shifting procedure is initiated between the two limit positions depending on the detected values in the shift speed range in first gear.

3. Method according to one of claims 1 or 2, characterised in that the shift speed range in first gear is defined in such a way that the latter comprises the entire theoretically possible shift speed range, which is delimited by a lowest critical driving speed and a maximum possible driving speed.

4. Method according to one of claims 1 to 3, characterised in that the shift speed range is reduced in size compared to the theoretically possible shift speed range.

5. Method according to one of claims 1 to 4, characterised in that the shift speed range is adjusted to low driving speeds.

6. Method according to one of claims 1 to 4, characterised in that the shift speed range is adjusted to higher driving speeds.

7. Method according to one of claims 5 or 6, characterised in that the shift speed range is set so that in a shifting procedure in the whole shift speed range only a single target speed is reached in the target gear.

8. Method according to one of claims 4 to 7, characterised in that the shift speed range is changed by a factor from the theoretically total possible shift speed range.

9. Driving unit for performing the method according to one of claims 1 to 8
9.1 with a driving motor;
9.2 with a transmission, comprising at least two gears;
9.3 with a control device assigned to the transmission; characterised by the following features;
9.4 the control device has a control device with at least three inputs and at least one output;
9.5 the first input is coupled with a measuring device for detecting a value describing the acceleration of the motor vehicle;
9.6 the second input is coupled with a device for detecting the moment of the driving motor;
9.7 the third input is coupled with a device for detecting the speed of the driving motor;
9.8 the output is coupled with an actuating member for performing the gear shift in the transmission;
9.9 in the control device at least one characteristic line can be stored for a shift speed range to characterise the connection between the current acceleration, driving speed, drive moment and a shift speed;
9.10 means are provided for forming the control variable from the input values.

10. Driving unit according to claim 9, characterised in that the means is a routine programmed in the control device.

11. Driving unit according to one of claims 9 or 10, characterised in that for each power stage a characteristic line is stored in the control device.

12. Driving unit according to one of claims 9 or 10, characterised in that a family of characteristics is stored in the control device.

13. Driving unit according to one of claims 9 to 12, characterised in that in the control device for at least two shift speed ranges characteristic lines or characteristic fields are stored.

14. Driving unit according to claim 13, characterised in that on the control device an additional input is provided, which is coupled with an actuation device for selecting the shift speed ranges.

## Revendications

1. Procédé pour l'exploitation d'une unité d'entraînement d'un véhicule, comprenant une machine d'entraînement et une boîte de vitesses avec au moins deux gammes de vitesses,
1.1 au cours duquel les grandeurs suivantes sont déterminées en permanence:
- une grandeur caractérisant l'accélération du véhicule
- des grandeurs caractérisant la puissance de la machine d'entraînement;
1.2 au cours duquel, il est possible, pour un changement de vitesse dans la gamme initiale, de définir une plage de vitesses de rotation de changement de gamme et une plage de vitesses de rotation qui est limitée dans la gamme d'arrivée par une vitesse de rotation minimale et maximale d'entraînement pouvant être atteintes;
1.3 au cours duquel la plage de vitesses de rotation de changement de gamme est au moins limitée par une vitesse de rotation de changement de gamme inférieure et une vitesse de rotation de changement de gamme supérieure et la plage de vitesses de rotation par une vitesse de rotation cible inférieure et une autre vitesse de rotation;
1.4 au cours duquel l'opération de changement de gamme est engagée en fonction de l'accélération déterminée, caractérisée par les caractéristiques suivantes:
1.5 au cours duquel la vitesse de rotation cible inférieure lors d'un changement de gamme dans un premier état limite sous une accélération élevée à basses vitesses de rotation d'entraînement ou sous une faible décélération à faibles vitesses de rotation d'entraînement est atteinte lors de l'engagement d'un changement de gamme pour une multitude de vitesses de rotation de changement de gamme;
1.6 au cours desquels l'opération de changement de gamme entre le premier état limite et la plus grande vitesse de rotation d'entraînement pouvant être atteinte dans la gamme d'arrivée est engagée en fonction des grandeurs déterminées dans la plage de vitesses de rotation de changement de gamme de la gamme initiale.

2. Procédé selon la revendication 1 caractérisé par les caractéristiiques suivantes:
2.1 au cours duquel la plage de vitesses de rotation en tant que plage de vitesses de rotation cible est limitée par une vitesse de rotation cible supérieure;
2.2 au cours duquel la vitesse de rotation cible supérieure lors d'une opération de changement de gamme dans un second état liimite sous une faible accélération à vitesses de rotation d'entraînement élevées ou sous une décélération élevée à vitesses de rotation d'entraînement élevées est atteinte lors de l'engagement d'une opération de changement de gamme pour une multitude de vitesses de rotation de changement de gamme;
2.3 au cours duquel l'opération de changement de gamme entre les deux états limites est engagé en fonction des grandeurs déterminées dans la plage des vitesses de rotation de changement de gamme dans la gamme initiale.

3. Procédé selon l'une des revendications 1 ou 2 caractérisé en ce que la plage de vitesses de rotation de changement de gamme dans la gamme initiale est déterminée de telle sorte que celle-ci couvre la totalité théoriquement possible de la plage des vitesses de rotation de changement de gamme laquelle est limitée par une vitesse de rotation d'entraînement minimale inférieure critique et une vitesse de rotation d'entraînement maximale possible.

4. Procédé selon l'une des revendications 1 à 3 caractérisé en ce que la plage de vitesses de rotation de changement de gamme est réduite dans son étendue par rapport à la plage de vitesses de rotation de changement de gamme théoriquement possible.

5. Procédé selon l'une des revendications 1 à 4 caractérisé en ce que la plage de vitesses de rotation de changement de gamme est déplacée vers des vitesses de rotation d'entraînement basses.

6. Procédé selon l'une des revendications 1 à 4 caractérisé en ce que la plage de vitesses de rotation de changement de gamme est déplacée vers des vitesses de rotation d'entraînement élevées.

7. Procédé selon l'une des revendications 5 ou 6 caractérisé en ce que la plage de vitesses de rotation de changement de gamme est déterminée de telle sorte que lors d'une opération de changement de gamme sur l'ensemble de la plage de vitesses de rotation de changement de gamme seule une vitesse de rotation cible soit atteinte dans la gamme cible.

8. Procédé selon l'une des revendications 4 à 7 caractérisé en ce que la plage de vitesses de rotation de changement de gamme est modifiée au moyen d'un facteur à partir de la totalité théorique possible de la plage des vitesses de rotation de changement de gamme.

9. Unité d'entraînement pour la réalisation du procédé selon l'une des revendications 1 à 8
9.1 avec une machine d'entraînement;
9.2 avec une boîte de vitesse comprenant au moins deux gammes;
9.3 avec un dispositif de commande affecté à la boîte de vitesses, caractérisé par les caractéristiques suivantes:
9.4 Le dispositif de commande présente un appareil de commande avec au moins trois entrées et au moins une sortie;
9.5 la première entrée est couplée à un dispositif de mesure pour la saisie d'une grandeur décrivant l'accélération du véhicule;
9.6 la seconde entrée est couplée à un dispositif pour la saisie du couple de la machine d'entraînement;
9.7 la troisième entrée est couplée à un dispositif pour la saisie de la vitesse de rotation de la machine d'entraînement;
9.8 la sortie est couplée avec un actuateur pour la réalisation de l'opération de changement de gamme dans la boîte de vitesses;
9.9 il est possible de mémoriser au moins une courbe caractéristique dans l'appareil de commande pour une plage de vitesses de rotation de changement de gamme pour la caractérisation de la relation entre l'accélération momentanée, la vitesse de rotation d'entraînemenent, le couple d'entraînement et une vitesse de rotation de changement de gamme;
9.10 des moyens sont prévus pour constituer la grandeur de réglage à partir des grandeurs d'entrée:

10. Unité d'entraînement selon la revendication 9 caractérisée en ce que le-dit moyen est une routine programmée dans l'appareil de commande.

11. Unité d'entraînement selon l'une des revendications 9 ou 10 caractérisée en ce qu'une courbe caractéristique est enregistrée dans l'appareil de commande pour chaque étage de charge.

12. Unité d'entraînement selon l'une des revendications 9 ou 10 caractérisée en ce qu'une colline de courbes caractéristiques est enregistrée dans l'appareil de commande.

13. Unité d'entraînement selon l'une des revendications 9 à 12 caractérisée en ce que des courbes caractéristiques ou des collines de courbes caractéristiques sont enregistrées dans l'appareil de commande pour au moins deux plages de vitesses de rotation de changement de gamme.

14. Unité d'entraînement selon la revendication 13 caractérisée en ce qu'une entrée supplémentaire est prévue sur l'appareil de commande laquelle est couplée à un dispositif d'actionnement pour la sélection des plages de vitesse de rotation de changement de gamme.
